# EUROPÄISCHE PATENTANMELDUNG

(11) **EP 2 552 031 A1**
(43) Veröffentlichungstag der Anmeldung: **30.01.2013**
(21) Anmeldenummer: 11175309.1
(22) Anmeldetag: 26.07.2011
(51) Int. Cl.: H04B 5/02, B60R 16/023, H04B 5/00, H01H 9/02, H01H 9/16, H03K 17/945

(54) **Türöffnerschalter**

(71) Anmelder: EAO Holding AG, 4601 Olten (CH)
(72) Erfinder: Lehmann, Hanna, 4600 Olten (CH)
(74) Vertreter: Liebetanz, Michael

(57) **Zusammenfassung**

Ein Türöffnerschalter (10) umfasst einen Taster (11), ein Gehäuse (12) mit einem Innenraum, ein Rückstellelement, welches den Taster (11) mit dem Gehäuse (12) verbindet, und ein elektrisches Schaltelement. Dabei ist der Taster (11) von einer Ruheposition in eine Schaltposition relativ zum elektrischen Schaltelement bewegbar, so dass das elektrische Schaltelement, das im Innenraum des Gehäuses (12) angeordnet ist, betätigbar ist. Das Gehäuse hat eine dem Taster (11) gegenüberliegende Gehäuse-Grundfläche (31). Der Türöffnerschalter (10) hat ferner ein Anschlussgehäuse (22), in dem eine Anschlussleitung (13) für die Energieversorgung und Signalleitung endet und welches über eine Anschlussgehäuse-Grundfläche (32) verfügt. In Gehäuse (12) und Anschlussgehäuse (22) sind jeweils eine kabellose Signalübertragungseinrichtung (50) vorgesehen, so dass bei Montage von Gehäuse-Grundfläche (31) und Anschlussgehäuse-Grundfläche (32) auf beiden Seiten einer flächenförmigen Wand (90; 91, 92, 93) aus nicht magnetisierbarem Material vom Taster (11) erzeugte Signale über die Signalübertragungseinrichtung (50) und die Anschlussleitung (13) ableitbar sind.

## Beschreibung

### TECHNISCHES GEBIET

Die vorliegende Erfindung betrifft einen Türöffnerschalter, umfassend einen Taster, ein Gehäuse mit einem Innenraum, ein Rückstellelement, welches den Taster mit dem Gehäuse verbindet, und ein elektrisches Schaltelement, wobei der Taster von einer Ruheposition in eine Schaltposition relativ zum elektrischen Schaltelement bewegbar ist, so dass das elektrische Schaltelement, das im Innenraum des Gehäuses angeordnet ist, betätigbar ist, wobei das Rückstellelement den Taster nach der Betätigung in die Ruheposition zurückstellt,

### STAND DER TECHNIK

Aus dem Stand der Technik sind Türöffnerschalter für den öffentlichen Verkehr bekannt, die in die Türen selbst, beispielsweise Schiebetüren oder die Türflügel eingesetzt werden. Um dabei einen Schalter in der Tür sowohl von Innen als auch von Aussen öffnen zu können, ist ein separater Schalter innen und aussen einzusetzen.

Vorteilhafterweise werden diese beiden Türöffnerschalter kombiniert, so dass ein doppelter Türöffnerschalter vorgesehen ist, der über eine Betätigungsfläche sowohl auf der Innenseite des Fahrzeugs des öffentlichen Verkehrs wie auch auf der Aussenseite verfügt. Damit kann ein und dieselbe Tür von beiden Seiten, Aussen wie Innen, an derselben räumlichen Stelle geöffnet werden, was mehrere Vorteile hat.

Zum einen ist der Öffnungsmechanismus zusammen mit den entsprechenden Signalleiterbahnen an einem Ort konzentriert und nicht, wie bei gewissen Lösungen des Standes der Technik, jeweils in dem Chassis des Fahrzeugs eingebaut.

Ein weiterer Vorteil liegt in der einfacheren Einbauweise und der Verminderung der Anzahl der benötigten Teile. So ist es beispielsweise möglich, einen einzigen akustischen Geber vorzusehen, mit dem ein akustisches Signal sowohl für den Innenraum als auch für den Aussenraum abgegeben werden kann. Es ist weiterhin möglich Leuchtkörper, beispielsweise LEDs vorzusehen, die über Lichtleiter ein optisches Aktivierungssignal sowohl für die Anzeige auf der Innenseite als auch für die Anzeige auf der Aussenseite weiterleiten.

Ein solcher Türöffnerschalter ist aus der EP 2 266 126 bekannt, wo die dortige Fig. 6 einen in eine Tür einbaubaren Schalter zeigt.

Bei einer solchen Doppelschalterlösung besteht die Notwendigkeit, die Tür, in der dieser Doppelschalter einzusetzen ist, mit einer Aufnahmeöffnung zu durchbohren. Dies ist bei einer Tür aus Metall oder einer Tür aus einem Kunststoff- oder Verbundmaterial ein Zusatzkostenaufwand, während es bei einer Glastür eine strukturelle Schwächung der Scheibe und erhöhte Kosten nach sich zieht. Es besteht die Tendenz Glastüren mit einer möglichst grossflächigen Verglasung herzustellen, so dass dort nicht die Möglichkeit besteht, den Doppelschalter in den umgebenden Rahmen des Glases einzubauen.

Aus der EP 1 286 478 ist es bekannt, bei einer Bustüre die Information der taktilen Sensorelemente eines Klemmschutzsystems der Tür mit Hilfe von Transpondern an den Türrahmen selber zu übertragen. Dies ermöglicht es, die auf der Tür des Fahrzeugs selber angebrachten Sensorelemente in drahtloser Weise mit der Auswerteelektronik, die am Türrahmen oder sonst fest im Bus installiert ist, zu verbinden. Diese Transponder für die Sensorelemente eines Klemmschutzsystems sind im Kantenbereich der Tür gegenüber dem Chassis angeordnet.

### DARSTELLUNG DER ERFINDUNG

Ausgehend von diesem Stand der Technik liegt der Erfindung die Aufgabe zugrunde, einen Türöffnerschalter anzugeben, der mit weniger Aufwand und geringerer Wartung in einfacher Weise in die Türen des öffentlichen Nahverkehrs integrierbar ist.

Diese Aufgabe wird erfindungsgemäss mit den Merkmalen des unabhängigen Anspruchs 1 gelöst.

Zu dem Gehäuse mit dem Taster tritt ein zweites, ein Anschlussgehäuse hinzu, in dem die bekannte Anschlussleitung für die Energieversorgung und Signalleitung endet. Somit wird es möglich, die dem Taster gegenüberliegende Gehäuse-Grundfläche und die dem Anschlussgehäuse zugehörige Anschlussgehäuse-Grundfläche so anzuordnen, dass bei Montage von Gehäuse-Grundfläche und Anschlussgehäuse-Grundfläche auf beiden Seiten einer flächenförmigen Wand aus nicht magnetisierbarem Material vom Taster erzeugte Signale über eine in Gehäuse und Anschlussgehäuse vorgesehene, jeweils komplementäre kabellose Signalübertragungseinrichtung und die Anschlussleitung ableitbar sind. Mit anderen Worten, die Tür eines Fahrzeuges muss zur Montage des Türöffnerschalters nicht mehr mit einem Loch versehen werden und/oder eine Kabelleitung über den Rand der Tür versehen werden.

Das Tastergehäuse kann dann in seinen zwei Teilen auf beiden Seiten auf ein nicht magnetisierbares Material einer Türe befestigt werden. Einer der beiden Taster, Vorteilhafterweise der Innere, ist mit einer Stromversorgung in bekannter Art und Weise verbunden. Die Elektronik auf der Innenseite der Tür ist so ausgelegt, um die Tastenauslösung auf dieser Seite, sofern vorhanden in üblicherweise auszugestalten. Insbesondere umfasst die Elektronik auf der Innenseite eine Transpondervorrichtung, mit der Energie und Information auf die andere Seite des nichtmagnetisierbaren Materials übertragen werden und dort von einer entsprechenden komplementären Antennenanordnung empfangen wird. In gleicher Weise wir diese Antennenanordnung als Sender für die Auslöser der Taste auf der Aussenseite verwendet. Es ist bei anderen Ausführungsbeispielen ebenfalls möglich, als Sendevorrichtung eine beispielsweise kapazitive Kopplung des Tasters mit der Gegenüberliegenden Seite vorzusehen. Wesentlich ist es, dass der Schalterteil auf der Aussenseite des Fahrzeugs, insbesondere einer Tür ohne eine kabelgebundene Stromversorgung und ohne eine kabelgebundene Informationsübertragung mit der Steuerung des Türöffnerschalters verbunden ist. Vorzugsweise ist der Türöffnerschalter zweiseitig als doppelter Türöffnerschalter ausgestaltet, d.h. dass auf der Innenseite bestehende Element ist ebenfalls ein Taster und dessen Signale werden direkt abgeleitet.

Vorteilhafterweise reicht die übertragene Leistung über das nichtmagnetische Material der Tür des Fahrzeuges dafür aus, die Anzeigelemente wie auch einen akustischen Tongeber mit Strom zu versorgen. Hierfür ist auf der äusseren Seite eine Leistungsversorgung im Schalter integriert, welcher die Hochfrequenz in die für die Elektronik notwendige Spannung umtransformiert und gleichrichtet.

Aus der EP 1 703 640 ist ein kontaktloser Schalter mit einem Transponder bekannt, welcher ein Antwortsignal liefert, wenn er von einer Transpondereinheit abgefragt wird.

Aus der WO 00/58752 ist ein RFID Element bekannt, welches zur Übertragung der Messwerte eines Sensors auf der Vorrichtungsseite über die RFID Antenne übertragene Leistung versorgt wird.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Skizze eines Türöffnerschalters gemäss einem Ausführungsbeispiel gemäss der Erfindung im eingebauten Zustand; und
- Fig. 2: eine schematische Schaltungsskizze für einen Türöffnerschalter gemäss Fig. 1.

### BESCHREIBUNG BEVORZUGTER AUSFÜHRUNGSFORMEN

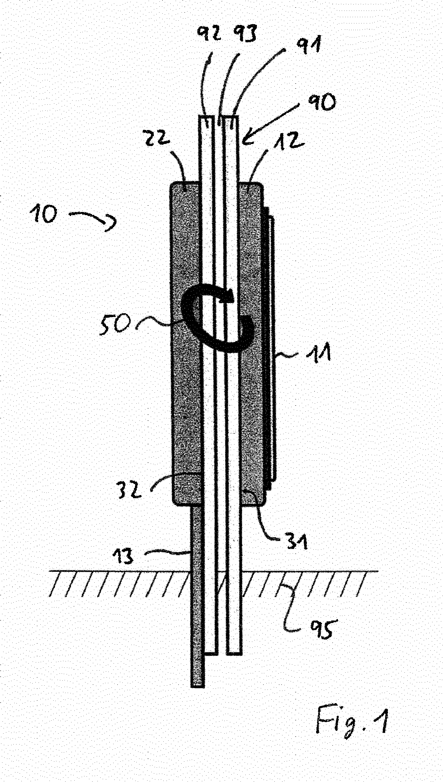

Die Fig. 1 zeigt eine schematische Skizze eines Türöffnerschalters 10 gemäss einem Ausführungsbeispiel gemäss der Erfindung im eingebauten Zustand. Der Türöffnerschalter 10 umfasst einen Taster 11, der an einem Gehäuse 12 vorgesehen ist. Üblicherweise umfasst das Gehäuse 12 einen Innenraum mit einem Rückstellelement, welches den Taster 11 mit dem Gehäuse 12 verbindet. Dort ist auch ein elektrisches Schaltelement vorgesehen, wobei der Taster 11 von einem Benutzer des Schalters 10 durch Druck auf diesen aus einer Ruheposition in eine Schaltposition relativ zum elektrischen Schaltelement bewegbar ist, so dass das elektrische Schaltelement, das im Innenraum des Gehäuses 12 angeordnet ist, betätigt wird. Nach Loslassen des Tasters 11 bewirkt, das Rückstellelement das Zurückstellen in die Ruheposition. Ein solcher Schalter ist beispielsweise aus EP 2 266 126 der Anmelderin bekannt.

Das Gehäuse 12 weist nun eine dem Taster 11 gegenüberliegende Gehäuse-Grundfläche 31 auf, die üblicherweise flach ausgestaltet ist. Der Türöffnerschalter 10 verfügt ferner über ein Anschlussgehäuse 22, in dem eine übliche Anschlussleitung 13 für die Energieversorgung und Signalleitung endet, und das demgemäss einerseits mit Strom versorgt ist und welches Signale an eine Steuereinheit für die Öffnung und Schliessung der Tür weiterleitet und von dieser Steuereinheit Steuersignale zur Ansteuerung von optischen und akustischen Signalgebern in dem Türöffnerschalter erhält. Das Anschlussgehäuse 22 hat dann ebenfalls eine Anschlussgehäuse-Grundfläche 32, die meist flach ausgestaltet ist.

In Gehäuse 12 und Anschlussgehäuse 22 sind jeweils komplementäre Elemente jeweils einer kabellosen Signalübertragungseinrichtung 50 vorgesehen. Dann ist es möglich, bei Montage von Gehäuse-Grundfläche 31 und Anschlussgehäuse-Grundfläche 32 auf beiden Seiten einer flächenförmigen Wand 90 aus nicht magnetisierbarem Material vom Taster 11 erzeugte Signale über die Signalübertragungseinrichtung 50 zu senden, die dann über die Anschlussleitung 13 ableitbar sind.

Die Wand 90 ist üblicherweise eine Tür eines Fahrzeuges des öffentlichen Verkehrs, wie ein Bus oder ein Strassenbahnwagen oder ein Zugwaggon. Eine solche Wand 90 kann insbesondere eine doppelwandige Glasscheibe beispielsweise der Tür selber sein, mit Scheiben 91 und 92, und dazwischen einer Luftschicht 93 und gegebenenfalls einem Unterdruck. In der Fig. 1 ist dann die Wand 90 am Fahrzeug, beispielsweise am Chassis, über einen Türrahmen befestigt, der mit dem Bezugszeichen 95 bezeichnet ist. Da die Wände und insbesondere die Türen solcher Fahrzeuge meistens flach sind, können auch die Anschlussgehäuse-Grundfläche 32 und die Gehäuse-Grundfläche 31 flach ausgestaltet sein. Dann können diese Gehäuse 12 und 22 auf der Wand aufgeklebt sein, was insbesondere bei Glasscheibentüren Sinn macht und vorteilhaft ist.

Bei einer bevorzugten, in der Fig. 1 nicht dargestellten Ausführungsform, ist auf der Seite des Anschlussgehäuses 22 ein weiterer Taster vorgesehen, so dass mit dem Türöffnerschalter gemäss der Erfindung die Tür von beiden Seiten geöffnet werden kann. Vorzugsweise wird das Anschlussgehäuse 22 innen montiert.

Die Signalübertragungseinrichtung 50 kann eine Transpondereinrichtung für kabellose Energieversorgung beinhalten. Die Signalübertragungseinrichtung 50 in dem Gehäuse 12 beziehungsweise in dem Anschlussgehäuse 22 umfasst dann jeweils eine komplementäre Antennenanordnung.

Es kann auch eine kapazitive Kopplung des Tasters 11 mit dem Anschlussgehäuse 22 vorgesehen sein.

In dem Türöffnerschalter 10 kann in dem Gehäuse 12 und/oder in dem Anschlussgehäuse 22 ein akustischer Tongeber vorgesehen sein.

Zumeist ist in dem Türöffnerschalter 10 in dem Gehäuse 12 und/oder in dem Anschlussgehäuse 22 ein Beleuchtungselement, insbesondere eine LED, vorgesehen. Eine Vereinfachung der Beleuchtung des Türöffnerschalters 10 ist beim Einsatz desselben auf einer Glastür, also einer transparenten Wand 90, möglich. Dann kann ein Beleuchtungselement, insbesondere eine LED, nur in dem Anschlussgehäuse 22 vorgesehen sein. Dann sind die Anschlussgehäuse-Grundfläche 32 und die Gehäuse-Grundfläche 31 mindestens an sich entsprechenden gegenüberliegenden Orten transparent, also weisen Fenster oder Durchbrüche auf und das Beleuchtungselement ist gegenüber dem genannten Ort in der Anschlussgehäuse-Grundfläche 32 angeordnet, entweder direkt oder über Lichtleiter, so dass das von ihm ausgestrahlte Licht durch eine transparente Wand 90 für die Beleuchtung des Tasters 11 von dem Anschlussgehäuse 22 in das Gehäuse 12 leitbar ist.

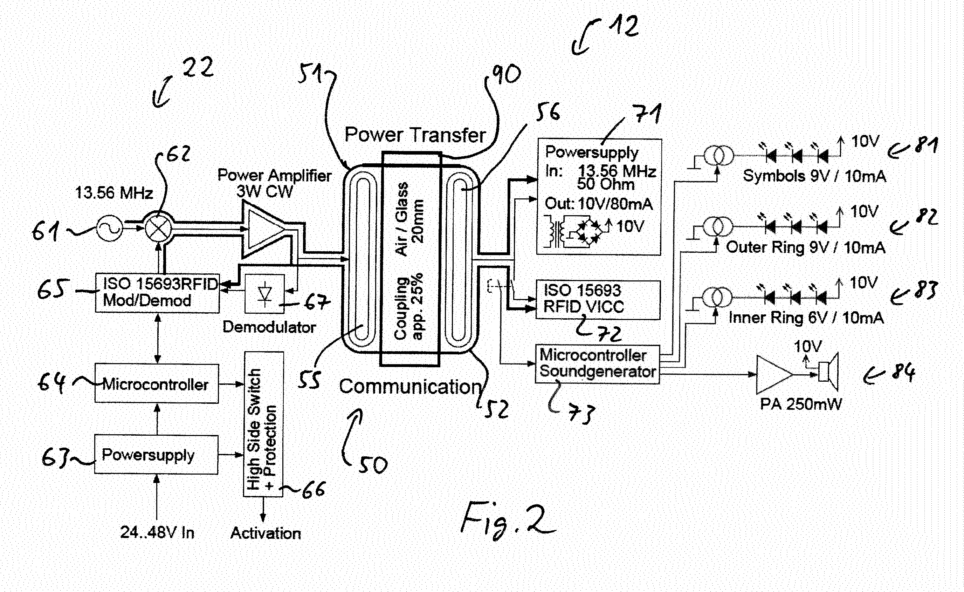

Die Fig. 2 zeigt eine schematische Schaltungsskizze für einen Türöffnerschalter gemäss Fig. 1. Die Skizze zeigt keine körperlichen Elemente der Gehäuse 12 und 22. Die Signalübertragungseinrichtung 50 besteht aus zwei Antennen 55 und 56 in Anschlussgehäuse 22 beziehungsweise Gehäuse 12 nahe der in der Fig. 2 nicht dargestellten Anschlussgehäuse-Grundfläche 32 beziehungsweise Gehäuse-Grundfläche 31.

Die Antennen 55 und 56 sind galvanisch getrennt auf ihren beiden Seiten mit jeweiligen Steuereinrichtungen verbunden. Mit dem Bezugszeichen 51 ist die unidirektionale Leistungsübertragung bezeichnet, die von einer 13.56 MHz Quelle 61 für die Leistungsversorgung ausgeht, auf deren Signal Nutzsignale im Mischer 62 aufmoduliert werden, wobei ein Mikrokontroller 64 von einem Leistungsbaustein 63 direkt versorgt wird und einen ISO 15893 RFID Modulator/Demodulator 65 ansteuert. Der Schalter 66 ist ein elektronischer Schalter, der als "High Side Switch" oder als "Low Side Switch" ausgeführt ist und eine integrierte Kurzschlussstromüberwachung und einstellbare Überstrombegrenzung beinhaltet.

Über die Antenne 55 eingehende Signale aus dem Signalweg 52 werden über einen Demodulator 67 ausgekoppelt und dem ISO 15893 RFID Modulator/Demodulator 65 zugeführt, der in einem bidirektionalen Kontakt mit dem Mikrokontroller steht. So ist es möglich, von den Elementen im Gehäuse 12 Signale zu empfangen und Steuersignale für Elemente im Gehäuse 12 zu übertragen. Dafür ist nach dem Mischer 62 ein Leistungsverstärker vorgesehen, beispielsweise mit mehreren, insbesondere 3 Watt Dauerleistung.

Auf der Aussenseite im Gehäuse 12 wird die ankommende Leistung in einer Leistungsversorgung 71 ausgekoppelt und für die Ansteuerung der verschiedenen Komponenten (insbesondere 72, 73, 81, 82, 83 und 84) verwendet.

Der Umschalter 74 entspricht dem Taster 11 aus Fig. 1 und dient dem Fahrgast als Betätiger. Beim Drücken, also dem Schliessen des Kontaktes des Umschalters 74, wird der RFID mit Hochspannung versorgt und der Mikrocontroller steuert die Umschaltung für die Symbolbeleuchtung.

Auf der Signalseite ist ein Zwillingsbaustein zum Modulator/Demodulator 65 vorgesehen, nämlich Modulator/Demodulator 72, mit dem die Signale des Tasters 11 verarbeitet und über die Antennen 56 und 55 weitergemeldet werden.

In dem Mikrokontrollerbaustein 73 werden eingehende Signale verarbeitet, um einen Akustikgeber 84 und optische Elemente 81 bis 83 anzusteuern, bei denen es sich um eine Symbolbeleuchtung 81 und um übliche Aussenringe und Innenringe 82 und 83 handeln kann.

In einem in den Zeichnungen nicht dargestellten Ausführungsbeispiel nimmt der Mikrokontroller 64 innen die Funktion des hier äusseren Mikrokontrollerbausteins 73 in bezug auf die Ansteuerung der optischen Elemente 81 bis 83 ein, nämlich, wenn diese im Innengehäuse 22 angeordnet sind und das ausgesandte Licht über Öffnungen in den Gehäusen 12 und 22 und geeignete Lichtleiter in dem Schalter 10 für die Beleuchtung des Tasters 11 geleitet wird. Das ist natürlich nur bei Vorhandensein einer Glasscheibe als Wand 90 oder einer Öffnung in dieser sinnvoll. Dabei werden die Beleuchtungselemente vorzugsweise dann auch gleich für einen zweiten innenliegenden Taster verwendet, der in den Ausführungsbeispielen, die in den Zeichnungen dargestellt sind, nicht vorhanden ist.

### BEZUGSZEICHENLISTE

| | | | |
|---|---|---|---|
| 10 | Türöffnerschalter | 65 | Modulator/Demodulator |
| 11 | Taster | 66 | Schalter |
| 12 | Gehäuse | 67 | Demodulator |
| 13 | Anschlussleitung | 71 | Leistungsversorgung |
| 22 | Anschlussgehäuse | 72 | Modulator/Demodulator |
| 31 | Gehäuse-Grundfläche | 73 | Mikrocontroller |
| 32 | Anschlussgehäuse- | 74 | Umschalter |
| | Grundfläche | 81 | Symbol-Beleuchtung |
| 50 | Signalübertragungs- | 82 | Aussenring-Beleuchtung |
| | einrichtung | 83 | Innenring-Beleuchtung |
| 51 | Leistungsübertragung | 84 | Akustikgeber |
| 52 | Signalübertragung | 90 | Wand |
| 55 | Innen-Antenne | 91 | Glasscheibe |
| 56 | Aussen-Antenne | 92 | Glasscheibe |
| 61 | HF-Quelle | 93 | Luft / Vakuum |
| 62 | Mischer | 95 | Türrahmen |
| 63 | Leistungsversorgung | | |
| 64 | Mikrocontroller | | |

## Patentansprüche

1. Türöffnerschalter (10), umfassend einen Taster (11), ein Gehäuse (12) mit einem Innenraum, ein Rückstellelement, welches den Taster (11) mit dem Gehäuse (12) verbindet, und ein elektrisches Schaltelement, wobei der Taster (11) von einer Ruheposition in eine Schaltposition relativ zum elektrischen Schaltelement bewegbar ist, so dass das elektrische Schaltelement, das im Innenraum des Gehäuses (12) angeordnet ist, betätigbar ist, wobei das Rückstellelement den Taster (11) nach der Betätigung in die Ruheposition zurückstellt, **dadurch gekennzeichnet, dass** das Gehäuse eine dem Taster (11) gegenüberliegende Gehäuse-Grundfläche (31) hat, und dass der Türöffnerschalter (10) weiter über ein Anschlussgehäuse (22) verfügt, in dem eine Anschlussleitung (13) für die Energieversorgung und Signalleitung endet und welches über eine Anschlussgehäuse-Grundfläche (32) verfügt, dass in Gehäuse (12) und Anschlussgehäuse (22) jeweils eine kabellose Signalübertragungseinrichtung (50) vorgesehen ist, so dass bei Montage von Gehäuse-Grundfläche (31) und Anschlussgehäuse-Grundfläche (32) auf beiden Seiten einer im wesentlichen flächenförmigen Wand (90; 91, 92, 93) aus nicht magnetisierbarem Material vom Taster (11) erzeugte Signale über die Signalübertragungseinrichtung (50) und die Anschlussleitung (13) ableitbar sind.

2. Türöffnerschalter (10) nach Anspruch 1, **dadurch gekennzeichnet, dass** auf der Seite des Anschlussgehäuses (22) ein weiterer Taster vorgesehen ist.

3. Türöffnerschalter (10) nach Anspruch 1 oder 2, **dadurch gekennzeichnet, dass** die Signalübertragungseinrichtung (50) eine Transpondereinrichtung für kabellose Energieversorgung beinhaltet.

4. Türöffnerschalter (10) nach einem der Ansprüche 1 bis 3, **dadurch gekennzeichnet, dass** die Signalübertragungseinrichtung (50) in Gehäuse (12) beziehungsweise Anschlussgehäuse (22) jeweils eine komplementäre Antennenanordnung (55, 56) umfasst.

5. Türöffnerschalter (10) nach einem der Ansprüche 1 bis 3, **dadurch gekennzeichnet, dass** die Signalübertragungseinrichtung (50) in Gehäuse (12) beziehungsweise Anschlussgehäuse (22) eine kapazitive Kopplung des Tasters (11) mit dem Anschlussgehäuse (22) aufweist.

6. Türöffnerschalter (10) nach einem der Ansprüche 1 bis 5, **dadurch gekennzeichnet, dass** in dem Gehäuse (12) ein akustischer Tongeber (84) vorgesehen ist.

7. Türöffnerschalter (10) nach einem der Ansprüche 1 bis 6, **dadurch gekennzeichnet, dass** in dem Gehäuse (12) ein oder mehrere Beleuchtungselemente (81, 82, 83), insbesondere LEDs, vorgesehen sind.

8. Türöffnerschalter (10) nach einem der Ansprüche 1 bis 6, **dadurch gekennzeichnet, dass** in dem Anschlussgehäuse (22) mindestens ein Beleuchtungselement, insbesondere eine LED, vorgesehen ist, dass die Anschlussgehäuse-Grundfläche (32) und die Gehäuse-Grundfläche (31) mindestens an sich entsprechenden Orten transparent sind und dass das Beleuchtungselement so gegenüber dem genannten Ort in der Anschlussgehäuse-Grundfläche (32) angeordnet ist, so dass das von ihm ausgestrahlte Licht durch eine transparente Wand (90) für die Beleuchtung des Tasters (11) in das Gehäuse (12) leitbar ist.
